# FASCICULE DE BREVET EUROPEEN

(11) **EP 4 219 208 B1**
(45) Date de publication et mention de la délivrance du brevet: **17.12.2025**
(21) Numéro de dépôt: 23154347.1
(22) Date de dépôt: 31.01.2023
(51) Int. Cl.: B60K 11/08, B60L 8/00

(54) **VÉHICULE MUNI D'UN GÉNÉRATEUR ÉLECTRIQUE ÉOLIEN**
FAHRZEUG MIT EINEM WINDGETRIEBENEN STROMGENERATOR
VEHICLE WITH WIND DRIVEN ELECTRIC GENERATOR

(30) Priorité: 31.01.2022 FR 2200862
(43) Date de publication de la demande: 02.08.2023
(73) Titulaire: Prata Bruno Design, 17340 Chatelaillon Plage (FR)
(72) Inventeur: PRATA, Bruno, 17340 CHATELAILLON PLAGE (FR)
(74) Mandataire: Talbot, Alexandre

(56) Documents cités:
- EP-A1- 3 365 222
- WO-A1-2021/171213
- DE-A1- 102011 121 941
- DE-A1- 102018 006 408
- US-A1- 2012 234 612

## Description

### Domaine technique

L'invention est relative à un véhicule muni d'un générateur électrique éolien.

### Technique antérieure

De manière classique, un véhicule est muni d'un dispositif de motorisation. Le dispositif de motorisation fait tourner un véhicule automobile, par exemple une voiture, un camion, un avion.

Lorsque le véhicule se déplace, il se déplace par rapport à l'air extérieur ce qui génère des frottements. Différentes solutions techniques ont été proposées afin de profiter de la différence vitesse entre le véhicule et le l'air extérieur. Des aérogénérateurs ont été installés sur des voitures ou des camions pour profiter de la vitesse du vent. Il est possible de citer le document US 4,314,160, le document WO 2011/011856 ou le document US 4,424,452 qui propose d'installer un aérogénérateur sur le toit du véhicule. Cette solution technique est contre-productive car l'aérogénérateur est monté saillie de la carrosserie ce qui augmente fortement les frottements, le poids du véhicule et donc la consommation énergétique du dispositif de motorisation pour atteindre une même vitesse de référence. Le surcout de consommation n'est pas compensé par l'aérogénérateur.

Le document BE886028 divulgue un véhicule électrique qui possède un aérogénérateur utilisé pour recharger les batteries du véhicule. Le document JP 2003-269319 divulgue également une automobile possédant des aérogénérateurs montés dans la portion avant et qui fournissent de l'énergie électrique.

Le document DE3038879 divulgue un véhicule électrique muni de deux aérogénérateurs et d'un moteur thermique d'appoint. Un aérogénérateur est utilisé pour alimenter les phares, les clignotants les essuie-glaces et d'autres éclairage et collecteur de courant. L'autre aérogénérateur est utilisé pour le déplacement du véhicule.

Les documents US2012/234612A1, DE102011121941A1 et DE102018006408A1 montrent aussi un véhicule possédant un dispositif de motorisation, un dispositif de refroidissement pour refroidir au moins en partie le dispositif de motorisation et un générateur électrique éolien pour produire de l'énergie électrique.

### Objet de l'invention

Un objet de l'invention consiste à améliorer l'intégration d'un générateur électrique éolien dans un véhicule et notamment à améliorer le rendement énergétique du véhicule.

On tend à résoudre ce problème au moyen d'un véhicule qui comporte
- un dispositif de motorisation configuré pour déplacer le véhicule ;
- un dispositif de refroidissement configuré pour refroidir au moins en partie le dispositif de motorisation ;
- une canalisation agencée pour capter un flux d'air frappant une partie avant du véhicule, la canalisation débouchant face au dispositif de refroidissement pour refroidir le dispositif de refroidissement au moyen du flux d'air, le flux d'air se déplaçant dans la canalisation selon une première direction ;
- un générateur électrique éolien ayant au moins une pale et configuré pour produire de l'énergie électrique lorsque la au moins une pale est frappée par le flux d'air.

Le véhicule est remarquable en ce que :
- le générateur électrique est disposé dans la canalisation en amont du dispositif de refroidissement selon la première direction ;
- un circuit de commande est configuré pour bloquer la rotation de la au moins une pale lorsqu'une vitesse du flux d'air dans la canalisation est inférieure à une vitesse seuil minimale et/ou lorsqu'une vitesse du véhicule est inférieure à la vitesse seuil minimale et
en ce que le circuit de commande est configuré pour limiter la puissance produite par le générateur électrique à une puissance maximale.

Selon l'invention, le véhicule comporte un obturateur disposé en amont de la canalisation pour moduler la section utile de la canalisation et dans lequel le circuit de commande est connecté à l'obturateur, le circuit de commande étant configuré pour réduire la valeur de section utile de la canalisation pour que la puissance délivrée ne dépasse pas la puissance maximale.

De manière avantageuse, le circuit de commande est connecté à un capteur de vitesse et dans lequel le circuit de commande est configuré pour bloquer la rotation du générateur électrique lorsque le capteur de vitesse indique une vitesse inférieure à une vitesse minimale.

Dans une configuration particulière, le dispositif de motorisation comporte au moins une batterie et au moins un moteur électrique entrainant en rotation au moins une roue ou une hélice et dans lequel le dispositif de refroidissement refroidit la au moins une batterie.

Préférentiellement, le dispositif de motorisation comporte au moins une pile à combustible et dans lequel le dispositif de refroidissement refroidit la au moins une pile à combustible.

Selon un mode de réalisation, le dispositif de motorisation comporte au moins un moteur à combustion et dans lequel le dispositif de refroidissement refroidit le au moins un moteur à combustion.

Alternativement selon l'invention, le véhicule comporte comportant un capteur de température configuré pour mesurer la température du dispositif de refroidissement dans lequel le circuit de commande est configuré pour augmenter la valeur de section utile de la canalisation lorsque la température d'un fluide du dispositif de refroidissement dépasse une valeur seuil.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :

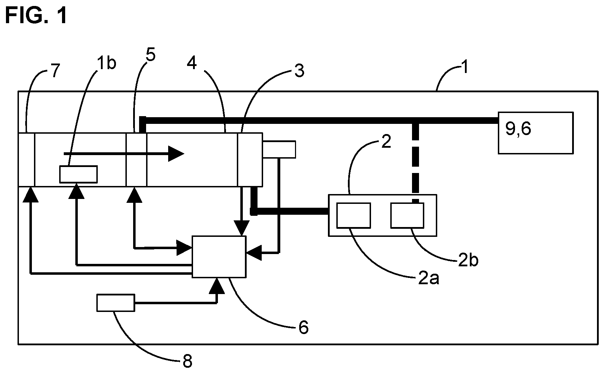

- la figure 1 illustre schématiquement un véhicule comportant un générateur électrique monté dans une canalisation alimentant un dispositif de refroidissement.

### Description des modes de réalisation

Le véhicule 1 est un véhicule routier, aérien ou ferroviaire. De préférence, le véhicule 1 est un véhicule automobile, c'est-à-dire un véhicule qui se déplace par lui-même. Le véhicule 1 possède un dispositif de motorisation 2 qui est configuré pour déplacer le véhicule 1. Le dispositif de motorisation 2 possède un moteur 2a et un moyen d'alimentation 2b. Le moyen d'alimentation 2b fournit de l'énergie ou un support capable d'être transformé en énergie, par exemple une batterie contenant de l'électricité, un réservoir contenant de l'hydrogène ou un produit pétrolier tel que de l'essence ou du gasoil. Selon les configurations, le dispositif de motorisation 2 est un dispositif de motorisation thermique, un dispositif de motorisation électrique, un dispositif de motorisation hybride thermique-électrique, un dispositif de motorisation à pile à combustible, un dispositif de motorisation hydride avec une pile à combustible et une batterie et/ou un moteur thermique.

Le véhicule 1 peut être une voiture, un camion, un véhicule utilitaire, un train, un métro, un tramway, un avion.

Le véhicule 1 possède un dispositif de refroidissement 3 qui est configuré pour refroidir au moins en partie le dispositif de motorisation 2. En fonctionnement, le dispositif de motorisation 2 dégage une quantité importante de chaleur ce qui nécessite de refroidir au moins une partie du dispositif de motorisation 2. Lorsque le dispositif de motorisation 2 possède un moteur thermique, il est important de posséder un dispositif de refroidissement 3 qui refroidit le moteur thermique et éventuellement d'autres éléments du dispositif de motorisation 2. Lorsque le dispositif de motorisation 2 possède un moteur électrique qui permet de déplacer le véhicule 1, il est important que le dispositif de refroidissement 3 refroidisse la batterie qui alimente le moteur 2a. Lorsque le dispositif de motorisation 2 possède une pile à combustible, il est important de posséder un dispositif de refroidissement 3 qui refroidit la pile à combustible.

Le véhicule 1 possède également une canalisation 4 qui est agencée pour capter un flux d'air frappant une partie avant du véhicule 1. La canalisation 4 débouche face au dispositif de refroidissement 3 pour refroidir le dispositif de refroidissement 3 au moyen du flux d'air, le flux d'air se déplaçant dans la canalisation 4 selon une première direction représentée par une flèche. Comme dans les véhicules de l'art antérieur, la canalisation 4 est configurée pour canaliser le flux d'air depuis l'avant du véhicule 1 vers le dispositif de refroidissement 3 de manière à apporter un air qui est plus frais que le dispositif de refroidissement 3. Lorsque le véhicule 1 se déplace vers l'avant, l'air entre dans la canalisation 4 et est poussée vers le dispositif de refroidissement 3. L'air frais permet d'évacuer les calories produites par le dispositif de motorisation 2 en refroidissant le dispositif de refroidissement 3. La canalisation 4 permet au flux d'air de se déplacer selon une première direction depuis l'avant du véhicule 1 jusqu'au dispositif de refroidissement 3.

Dans les véhicules de l'art antérieur, un flux d'air est utilisé uniquement pour refroidir le dispositif de refroidissement 3. Selon l'invention, le véhicule 1 possède un générateur électrique 5 qui est de type éolien et qui possède au moins une pale. Le générateur électrique 5 est configuré pour produire de l'énergie électrique lorsque la au moins une pale est frappée par le flux d'air.

Afin de ne pas pénaliser le coefficient de pénétration dans l'air, le générateur électrique 5 est disposé dans la canalisation 4 en amont du dispositif de refroidissement 3 selon la première direction. L'air qui pénètre dans la canalisation 4 frappe le générateur électrique 5 avant de frapper le dispositif de refroidissement 3. En installant, le générateur électrique 5 également appelé aérogénérateur ou éolienne dans la canalisation 4, ce dernier est installé à l'intérieur de la carrosserie du véhicule 1 et plus précisément dans la canalisation 4 qui fournit l'air frais au dispositif de refroidissement 3. Cela permet de ne pas ou de moins modifier le véhicule 1 pour y intégrer le générateur électrique 5 et ainsi fournir un apport en énergie électrique plus efficace.

Le générateur électrique 5 est disposé dans la canalisation 4 ce qui modifie l'écoulement de l'air dans la canalisation 4. Le générateur électrique 5 possède un effet non négligeable sur l'efficacité du dispositif de refroidissement 3. Le véhicule 1 possède un circuit de commande 6 qui est configuré pour adapter la puissance frigorifique et/ou mécanique de l'air circulant dans la canalisation 4 en fonction des besoins du véhicule 1.

Le circuit de commande 6 est configuré pour bloquer la rotation de la au moins une pale lorsqu'une vitesse du flux d'air dans la canalisation 4 est inférieure à une vitesse seuil minimale et/ou la vitesse du véhicule 1 est inférieure à une vitesse seuil minimale.

Lorsque le véhicule 1 se déplace à une vitesse faible, l'évacuation calorique induite par le dispositif de refroidissement 3 est faible, il est donc important que le générateur électrique 5 n'introduise pas une perte de charge significative. Il est donc préférable d'utiliser le flux d'air dans la canalisation 4 pour refroidir le dispositif de refroidissement 3. Lorsque le flux d'air dans la canalisation 4 est inférieur à une vitesse seuil minimale et/ou que la vitesse du véhicule 1 est inférieure à la vitesse seuil, cela correspond à un véhicule 1 qui se déplace à faible vitesse ce qui est assimilé à un véhicule 1 se déplaçant dans le trafic urbain, c'est-à-dire avec des phases continuelles d'accélérations, de décélérations et d'arrêt. Dans ces conditions, le dispositif de motorisation 2 est fortement sollicité ce qui tend à augmenter la température du dispositif de motorisation 2. **Il** est important de refroidir efficacement le dispositif de motorisation 2. Dans un mode de réalisation particulier, la vitesse seuil minimale est égale à 40km/h, voire 50km/h, voire 70km/h pour la vitesse seuil minimale du véhicule 1 et/ou pour la vitesse seuil minimale de l'air dans la canalisation 4.

Au contraire lorsque la vitesse d'écoulement du flux d'air est importante dans la canalisation 4, le générateur électrique 5 produit une quantité importante d'énergie électrique. Il est alors avantageux de profiter pleinement de la puissance mécanique fournie par le flux d'air pour faire tourner le générateur électrique 5 et produire de l'électricité.

La puissance électrique délivrée par le générateur électrique 5 est fonction de la puissance fournie par le flux d'air jusqu'à atteindre une puissance maximale seuil qui est définie par la configuration du générateur électrique 5.

Lorsque la vitesse du véhicule 1 est supérieure à la vitesse minimale seuil et/ou que la vitesse d'écoulement de l'air dans la canalisation 4 est supérieure à la vitesse minimale seuil cela est considéré comme un véhicule 1 circulant de manière libre sur le réseau, par exemple sur le réseau autoroutier. De manière classique, la vitesse du véhicule 1 est relativement constante ce qui se traduit par des besoins réduits en puissance frigorifique en regard de ce que peut fournir le flux d'air circulant dans la canalisation 4. Lorsque la vitesse du véhicule 1 est supérieure à la vitesse minimale seuil et/ou que la vitesse d'écoulement de l'air dans la canalisation 4 est supérieure à la vitesse minimale seuil, il est alors intéressant de faire tourner le générateur électrique 5 pour produire de l'électricité.

Cependant, lorsque le générateur électrique 5 est soumis à une puissance de flux d'air trop cela fait tourner trop rapidement le générateur électrique et cela introduit des problèmes mécaniques. Pour éviter de compliquer la configuration du générateur électrique 5, il est proposé de limiter la puissance produite par le générateur électrique 5 à une puissance maximale seuil. Le circuit de commande 6 est configuré pour limiter la puissance produite par le générateur électrique 5 à la puissance maximale seuil. Il est avantageux de dimensionner le générateur électrique 5 vis-à-vis de la puissance maximale seuil et ainsi fournir un générateur électrique 5 ayant un très bon rendement lorsque la puissance maximale seuil est délivrée.

Il est avantageux de définir la puissance maximale seuil comme la puissance délivrée par le générateur électrique 5 lorsque le véhicule 1 circule à une vitesse proche de la vitesse maximale autorisée sur les autoroutes ou à une vitesse proche de cette dernière. **Il** est avantageux de définir que la puissance maximale seuil correspond à une vitesse maximale comprise entre 110 et 140km/h pour un véhicule 1 de loisir, par exemple 130km/h. Il est avantageux de définir une vitesse maximale comprise entre 80 et 110km/h pour un camion, par exemple 90km/h.

Le circuit de commande 6 est préférentiellement configuré afin de faire fonctionner le générateur électrique 5 à la puissance maximale seuil lorsque la vitesse du véhicule 1 est supérieure à la vitesse maximale retenue pour définir la puissance maximale seuil et/ou lorsque la vitesse d'écoulement de l'air dans la canalisation 4 est supérieure à la vitesse maximale retenue. Le circuit de commande 6 peut être connecté à un obturateur 7 disposé en amont de la canalisation 4. L'obturateur 7 est configuré pour moduler la quantité d'air qui entre dans la canalisation 4 en modulant la section utile à l'entrée de la canalisation 4. La diminution de la section utile à l'entrée de la canalisation 4 permet de réduire de maintenir puissance appliquée sur le générateur électrique 5 malgré l'augmentation de la vitesse du flux d'air à l'entrée de la canalisation.

Le circuit de commande 6 est configuré pour commander la valeur de section utile de la canalisation 4 au moins en fonction d'une puissance électrique produite par le générateur électrique 5 et une vitesse du véhicule 1. Le circuit de commande 6 est configuré pour diminuer la section utile de la canalisation 4 pour que la puissance électrique générée par le générateur électrique 5 ne dépasse pas une puissance maximale. L'obturateur 7 permet de réduire la section efficace de la canalisation 4 ce qui limite la vitesse moyenne de l'air et donc la puissance délivrée au générateur électrique 5.

En complément ou dans une alternative de réalisation, il est possible de faire pivoter la au moins une pale du générateur électrique 5 pour réduire sa prise au flux d'air. Cependant, cette configuration est plus difficile à réaliser.

En imposant la vitesse seuil minimale en dessous de laquelle le générateur électrique 5 ne fonctionne pas et la puissance maximale à délivrer, il est possible de définir plus précisément les caractéristiques du générateur électrique 5 afin que ce dernier présente un compromis entre son encombrement, son poids et la plage de puissance accessible. **Il** est alors possible de produire un générateur électrique 5 dont les performances sont mieux adaptées aux besoins. **Il** n'est pas recherché un fonctionnement optimisé pour les vents faibles comme cela peut être le cas dans les éoliennes conventionnelles.

Il est également possible de prévoir que le générateur électrique 5 installé dans une voiture sera différent du générateur électrique 5 installé dans un camion car l'encombrement disponible est différent entre une voiture et un camion ainsi que la vitesse maximale autorisé. Il apparait également que la contrainte sur la masse du générateur électrique 5 n'est pas aussi critique dans un camion en comparaison d'une voiture.

Dans un mode de réalisation particulier, le véhicule 1 comporte un capteur de vitesse 8 qui est configuré pour mesurer la vitesse instantanée du véhicule 1. Il est avantageux que le circuit de commande 6 soit connecté à un capteur de vitesse configuré pour mesurer la vitesse du véhicule 1 et que le circuit de commande 6 soit configuré pour réduire la valeur de section utile de la canalisation 4 lorsque le capteur de vitesse indique une vitesse supérieure à une vitesse seuil maximale. Il est alors possible d'utiliser un générateur électrique 5 dont l'inclinaison de la ou les pales est fixe ce qui réduit le cout du générateur électrique 5.

Dans un mode de réalisation particulier, le générateur électrique 5 est configuré pour fournir de l'énergie électrique au circuit électrique 9 qui alimente les divers équipements du véhicule 1, par exemple l'éclairage intérieur et/ou extérieur, la climatisation, l'électronique embarquée, le dispositif de sonorisation de l'habitacle. Le circuit électrique 9 n'est pas configuré pour charger la batterie d'un véhicule électrique ou la batterie d'un véhicule thermique. En alimentant directement les équipements électriques, on évite une perte d'énergie liée au rendement de l'opération de charge de la batterie. En effet, l'utilisation de la batterie pour alimenter le circuit électrique se traduit généralement par la transformation de la tension délivrée par la batterie en une tension différente pour alimenter les équipements électriques. Il y a donc transformation de la tension délivrée par le générateur électrique en une tension acceptable par la batterie puis transformation de la tension délivrée par la batterie en une tension acceptée par les équipements électriques.

Dans un mode de réalisation particulier, le générateur électrique 5 est configuré pour fournir de l'énergie électrique à la batterie et ainsi charger la batterie.

De manière privilégiée, le véhicule 1 comporte un capteur de température qui est configuré pour mesurer la température du dispositif de refroidissement 3. Le circuit de commande 6 est connecté au capteur de température. Le circuit de commande 6 est configuré pour bloquer la rotation du générateur électrique 5 lorsque le capteur de température détecte que la température mesurée atteint une valeur seuil. La valeur seuil correspond à un dispositif de motorisation 2 qui est chaud et qui fortement sollicité.

Dans un mode de réalisation, le véhicule 1 est un véhicule routier, par exemple une voiture, un véhicule utilitaire ou un camion comportant une pluralité de roues et le dispositif de motorisation 2 comporte un ou plusieurs moteurs 2a qui font tourner la pluralité de roues.

## Revendications

1. Véhicule (1) possédant :
- un dispositif de motorisation (2) configuré pour déplacer le véhicule (1) ;
- un dispositif de refroidissement (3) configuré pour refroidir au moins en partie le dispositif de motorisation (2) ;
- une canalisation (4) agencée pour capter un flux d'air frappant une partie avant du véhicule (1), la canalisation 4 débouchant face au dispositif de refroidissement (3) pour refroidir le dispositif de refroidissement (3) au moyen du flux d'air, le flux d'air se déplaçant dans la canalisation (4) selon une première direction ;
- un générateur électrique (5) éolien ayant au moins une pale et configuré pour produire de l'énergie électrique lorsque la au moins une pale est frappée par le flux d'air, le générateur électrique (5) est disposé dans la canalisation (4) en amont du dispositif de refroidissement (3) selon la première direction ;
- un circuit de commande (6) configuré pour limiter la puissance produite par le générateur électrique (5) à une puissance maximale ;
**caractérisé en ce que** :
- le circuit de commande (6) est configuré pour bloquer la rotation de la au moins une pale lorsqu'une vitesse du flux d'air dans la canalisation (4) est inférieure à une vitesse seuil minimale et/ou lorsqu'une vitesse du véhicule (1) est inférieure à la vitesse seuil minimale ;
- un obturateur (7) est disposé en amont de la canalisation (4) pour moduler la section utile de la canalisation (4) et le circuit de commande (6) est connecté à l'obturateur (7) ; et
dans lequel le circuit de commande (6) est configuré pour réduire la valeur de section utile de la canalisation (4) pour que la puissance délivrée ne dépasse pas la puissance maximale et/ou le circuit de commande (6) est configuré pour augmenter la valeur de section utile de la canalisation (4) lorsque la température d'un fluide du dispositif de refroidissement (3) dépasse une valeur seuil, un capteur de température étant configuré pour mesurer la température du dispositif de refroidissement (3).

2. Véhicule (1) selon la revendication 1 dans lequel le circuit de commande (6) est connecté à un capteur de vitesse et dans lequel le circuit de commande (6) est configuré pour bloquer la rotation du générateur électrique (5) lorsque le capteur de vitesse indique une vitesse inférieure à une vitesse minimale.

3. Véhicule (1) selon l'une des revendications 1 et 2 dans lequel le dispositif de motorisation (2) comporte au moins une batterie et au moins un moteur (2a) électrique entrainant en rotation au moins une roue ou une hélice et dans lequel le dispositif de refroidissement (3) refroidit la au moins une batterie.

4. Véhicule 1 selon l'une quelconque des revendications 1 à 3 dans lequel le dispositif de motorisation (2) comporte au moins une pile à combustible et dans lequel le dispositif de refroidissement (3) refroidit la au moins une pile à combustible.

5. Véhicule (1) selon l'une quelconque des revendications 1 à 4 dans lequel le dispositif de motorisation (2) comporte au moins un moteur (2a) à combustion et dans lequel le dispositif de refroidissement (3) refroidit le au moins un moteur (2a) à combustion.

## Patentansprüche

1. Fahrzeug (1), umfassend:
- eine Motorisierungsvorrichtung (2), die dazu konfiguriert ist, das Fahrzeug (1) zu bewegen;
- eine Kühlvorrichtung (3), die dazu konfiguriert ist, die Motorisierungsvorrichtung (2) mindestens teilweise zu kühlen;
- eine Rohrleitung (4), die angeordnet ist, um einen Luftstrom aufzufangen, der auf eine Frontpartie des Fahrzeugs (1) trifft, wobei die Rohrleitung (4) der Kühlvorrichtung (3) gegenüber einmündet, um die Kühlvorrichtung (3) mithilfe des Luftstroms zu kühlen, wobei der Luftstrom sich in der Rohrleitung (4) in einer ersten Richtung bewegt;
- einen windgetriebenen Stromgenerator (5), der mindestens ein Rotorblatt aufweist und dazu konfiguriert ist, elektrische Energie zu erzeugen, wenn das mindestens eine Rotorblatt vom Luftstrom getroffen wird, wobei der Stromgenerator (5) in der ersten Richtung vor der Kühlvorrichtung (3) in der Rohrleitung (4) angeordnet ist;
- eine Steuerschaltung (6), die dazu konfiguriert ist, die vom Stromgenerator (5) erzeugte Leistung auf eine Maximalleistung zu begrenzen;
**dadurch gekennzeichnet, dass**:
- die Steuerschaltung (6) dazu konfiguriert ist, die Rotation des mindestens einen Rotorblatts zu blockieren, wenn eine Geschwindigkeit des Luftstroms in der Rohrleitung (4) kleiner als eine minimale Schwellengeschwindigkeit ist und/oder wenn eine Geschwindigkeit des Fahrzeugs (1) kleiner als die minimale Schwellengeschwindigkeit ist;
- ein Verschlussorgan (7) in der Strömungsrichtung vor der Rohrleitung (4) angeordnet ist, um den Nutzquerschnitt der Rohrleitung (4) zu modulieren, und die Steuerschaltung (6) mit dem Verschlussorgan (7) verbunden ist; und
wobei die Steuerschaltung (6) dazu konfiguriert ist, den Nutzquerschnittswert der Rohrleitung (4) zu reduzieren, damit die abgegebene Leistung die Maximalleistung nicht übersteigt, und/oder die Steuerschaltung (6) dazu konfiguriert ist, den Nutzquerschnittswert der Rohrleitung (4) zu erhöhen, wenn die Temperatur eines Fluids der Kühlvorrichtung (3) einen Schwellenwert übersteigt, wobei ein Temperatursensor dazu konfiguriert ist, die Temperatur der Kühlvorrichtung (3) zu messen.

2. Fahrzeug (1) nach Anspruch 1, wobei die Steuerschaltung (6) mit einem Geschwindigkeitssensor verbunden ist, und wobei die Steuerschaltung (6) dazu konfiguriert ist, die Rotation des Stromgenerators (5) zu blockieren, wenn der Geschwindigkeitssensor eine Geschwindigkeit anzeigt, die kleiner als eine Mindestgeschwindigkeit ist.

3. Fahrzeug (1) nach einem der Ansprüche 1 und 2, wobei die Motorisierungsvorrichtung (2) mindestens eine Batterie und mindestens einen Elektromotor (2a) aufweist, der mindestens ein Rad oder einen Propeller in Drehung versetzt, und wobei die Kühlvorrichtung (3) die mindestens eine Batterie kühlt.

4. Fahrzeug 1 nach einem der Ansprüche 1 bis 3, wobei die Motorisierungsvorrichtung (2) mindestens eine Brennstoffzelle aufweist, und wobei die Kühlvorrichtung (3) die mindestens eine Brennstoffzelle kühlt.

5. Fahrzeug (1) nach einem der Ansprüche 1 bis 4, wobei die Motorisierungsvorrichtung (2) mindestens eine Brennkraftmaschine (2a) aufweist, und wobei die Kühlvorrichtung (3) die mindestens eine Brennkraftmaschine (2a) kühlt.

## Claims

1. Vehicle (1) having:
- a drive device (2) configured to move the vehicle (1);
- a cooling device (3) configured to at least partially cool the drive device (2);
- a duct (4) arranged to catch an air flow striking a front part of the vehicle (1), the duct (4) opening out facing the cooling device (3) to cool the cooling device (3) by means of the air flow, the air flow flowing in the duct (4) in a first direction;
- a wind power electricity generator (5) having at least one blade and configured to produce electric power when the at least one blade is struck by the air flow, the electricity generator (5) is arranged in the duct (4) upstream from the cooling device (3) in the first direction;
- a control circuit (6) is configured to limit the power produced by the electricity generator (5) to a maximum power
**characterized in that** the control circuit (6) is configured to block rotation of the at least one blade when a speed of the air flow in the duct (4) is lower than a threshold minimum speed and/or when a speed of the vehicle (1) is lower than a threshold minimum speed;
- a blanking plate (7) is arranged upstream from the duct (4) to adjust the useful cross-section of the duct (4) and the control circuit (6) is connected to the blanking plate (7), and wherein the control circuit (6) is configured to reduce the value of the useful cross-section of the duct (4) so that the delivered power does not exceed the maximum power and/or the control circuit (6) is configured to increase the value of the useful cross-section of the duct (4) when the temperature of a fluid of the cooling device (3) exceeds a threshold value
- a temperature sensor being configured to measure the temperature of the cooling device (3).

2. Vehicle (1) according to claim 1 wherein the control circuit (6) is connected to a speed sensor and wherein the control circuit (6) is configured to block rotation of the electricity generator (5) when the speed sensor indicates a speed lower than a minimum speed.

3. Vehicle (1) according to one of claims 1 and 2 wherein the drive device (2) comprises at least one battery and at least one electric motor (2a) driving at least one wheel or a propeller in rotation and wherein the cooling device (3) cools the at least one battery.

4. Vehicle (1) according to any one of claims 1 to 3 wherein the drive device (2) comprises at least one fuel cell and wherein the cooling device (3) cools the at least one fuel cell.

5. Vehicle (1) according to any one of claims 1 to 4 wherein the drive device (2) comprises at least one combustion engine (2a) and wherein the cooling device (3) cools the at least one combustion engine (2a).
